(19) Europäisches Patentamt
European Patent Office
Office européen des brevets

(11) **EP 3 543 525 A1**

(12) **EUROPEAN PATENT APPLICATION**
published in accordance with Art. 153(4) EPC

(43) Date of publication:
25.09.2019 Bulletin 2019/39

(51) Int Cl.:
*F03G 7/06* (2006.01)     *D02G 1/02* (2006.01)
*H02N 11/00* (2006.01)

(21) Application number: 17886793.3

(22) Date of filing: 26.10.2017

(86) International application number:
PCT/JP2017/038691

(87) International publication number:
WO 2018/123240 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.12.2016 JP 2016252346

(71) Applicant: Lintec Corporation
Tokyo 173-0001 (JP)

(72) Inventor: KAWAHARA Jun
Tokyo 173-0001 (JP)

(74) Representative: V.O.
P.O. Box 87930
2508 DH Den Haag (NL)

(54) **ACTUATOR AND METHOD FOR MANUFACTURING SAME**

(57)     An actuator which is formed of a fibrous polymer material configured with a polymer, and includes a twist mark on an outermost surface of the fibrous polymer material, in which an angle x at which the twist mark is inclined with respect to a fiber axis of the fibrous polymer material, and an angle y at which the twist mark inclined with respect to a fiber axis of a fiber at the time of twisting the fiber configured with the polymer configuring the fibrous polymer material by adding a tensile stress of an tensile elastic modulus of the fiber $\times 4.5 \times 10^{-3}$ under an environment of 25°C up to a limitation on which coiling occurs or a limitation on which a breakage occurs have a relationship of $x > y + 0.5$.

## FIG. 1

**Description**

Technical Field

The present invention relates to an actuator and a manufacturing method thereof.
Priority is claimed on Japanese Patent Application No. 2016-252346, filed on December 27, 2016, the contents of which are incorporated herein by reference.

Background Art

Various products have been required to be motorized due to the advent of aging societies in advanced countries, the development of robotics, shifts away from manual labor to the intelligent activity, and the like, and therefore, various actuators have been proposed. For example, in Patent Document 1, an actuator including a coil-like polymer fiber to which a twist is applied is disclosed.
Such an actuator is formed by selecting a precursor polymer fiber having high strength and a high chain orientation, which is a single filament or a multifilament, by applying a twist to the precursor polymer fiber until coiling occurs or applying a twist to the precursor polymer fiber up to a level at which the coiling does not occur, and then, by coiling the initially applied twist in the same or the opposite direction.
In Patent Document 1, it is described that the actuator including the coil-like polymer fiber to which the twist is applied can be operated to provide tensile contraction or tensile expansion as a result of a temperature change. In addition, an optical microscope photograph of the polymer fiber before being coiled represents the characteristics of a spiral surface, and a bias angle $\alpha$ thereof with respect to a fiber direction is represented by the following expression.

$$\alpha = \tan^{-1}(\pi dT)$$

(In the expression, d is the diameter of the polymer fiber, and T is the amount of twist to be applied per the length of the polymer fiber.)

Citation List

Patent Literature

[Patent Document 1] Japanese Unexamined Patent Application, First Publication No. 2016-42783

Summary of Invention

Technical Problem

However, the actuator including the non-coil-like polymer fiber to which the twist is applied, disclosed in Patent Document 1, does not exhibit a large movable range with respect to the temperature change, and thus, the output may not also be sufficient.
The present invention has been made in consideration of the circumstances described above, and an object of the present invention is to provide a novel actuator and a manufacturing method thereof, in which a thermally large movable range is exhibited, compared to the related art.

Solution to Problem

As a result of the studies of the present inventors for attaining the object described above, an actuator has been found in which a thermally large movable range is exhibited, compared to the related art. In addition, a manufacturing method of such an actuator has been found in which the actuator is easily obtained by twisting a fibrous polymer material configured with a polymer having a glass transition temperature of higher than 25°C under an environment of a temperature which is higher than the glass transition temperature of the polymer.
That is, the present invention is as follows.

(1) An actuator which is formed of a fibrous polymer material configured with a polymer, and includes a twist mark on an outermost surface of the fibrous polymer material, in which an angle x at which the twist mark is inclined with respect to a fiber axis of the fibrous polymer material, and an angle y at which the twist mark is inclined with respect to a fiber axis of a fiber at the time of twisting the fiber configured with the polymer configuring the fibrous polymer material by adding a tensile stress of an tensile elastic modulus of the fiber $\times$ 4.5 $\times$ 10$^{-3}$ under an environment of 25°C up to a limitation on which coiling occurs or a limitation on which a breakage occurs have a relationship of x > y + 0.5°.

(2) The actuator according to (1), in which a glass transition temperature of the polymer is higher than or equal to 45°C.

(3) The actuator according to (1) or (2), in which the polymer is nylon.

(4) The actuator according to any one of (1) to (3), in which the angle x is greater than or equal to 45°.

(5) A manufacturing method of the actuator according to any one of (1) to (4), including: a step of twisting a fiber configured with a polymer having a glass transition temperature of higher than 25°C under an environment of a temperature which is higher than the glass transition temperature of the polymer.

Advantageous Effects of Invention

The actuator of the present invention exhibits a thermally large movable range, compared to an actuator of the related art.

Brief Description of Drawings

FIG. 1 is a schematic diagram illustrating an actuator according to a first embodiment of the present invention.
FIG. 2 is a graph illustrating an angle of a twist mark and a rotation angle of an actuator sample with respect to the number of twist rotations.

Description of Embodiments

An actuator according to a first embodiment of the present invention is an actuator which is formed of a fibrous polymer material configured with a polymer, and includes a twist mark on an outermost surface of the fibrous polymer material, in which an angle x at which the twist mark is inclined with respect to a fiber axis of the fibrous polymer material, and an angle y at which the twist mark is inclined with respect to a fiber axis of a fiber at the time of twisting the fiber configured with the polymer configuring the fibrous polymer material by adding a tensile stress of the tensile elastic modulus of the fiber $\times$ 4.5 $\times$ 10$^{-3}$ under an environmental temperature of 25°C up to a limitation on which coiling occurs or a limitation on which a breakage occurs have a relationship of x > y + 0.5°.

Examples of the polymer configuring the fibrous polymer material include nylon 6,6. In a case where a monofilament of nylon 6,6 having a diameter of 250 $\mu$m is twisted by adding a suitable tensile stress under an environment of 25°C such that coiling does not occur, a rotation can be performed up to approximately 1,000 times per 1 m, and polymer molecules in the vicinity of the outermost surface can be inclined with respect to a fiber axis of the monofilament up to approximately 44°. Therefore, a twist mark of approximately 44° is generated on the outermost surface of the monofilament. In a case where the monofilament of nylon 6,6 is twisted over the number of rotations, the coiling occurs. That is, the angle y at which the twist mark is inclined with respect to the fiber axis at the time of twisting the monofilament of nylon 6,6 up to the limitation on which the coiling occurs, is approximately 44°.

In a case where the monofilament of nylon 6,6 having a diameter of 500 $\mu$m is twisted by adding the suitable tensile stress under the environment of 25°C such that the coiling does not occur, the rotation can be performed up to approximately 500 times per 1 m, and the polymer molecules in the vicinity of the outermost surface of the monofilament can be inclined with respect to the fiber axis up to approximately 44°. Therefore, the twist mark of approximately 44° is generated on the outermost surface of the monofilament. That is, the angle y at which twist mark is inclined with respect to the fiber axis at the time of twisting the monofilament of nylon 6,6 up to the limitation on which the coiling occurs, is approximately 44°.

Thus, in a case where a fiber configured with a polymer having a glass transition temperature of higher than 25°C is twisted by adding a suitable tensile stress under an environment of a temperature (for example, 25°C) which is lower than or equal to the glass transition temperature of the polymer, the angle y at which the twist mark is inclined with respect to the fiber axis at the time of twisting the fiber immediately before the coiling occurs, is approximately constant regardless of the size (that is, the diameter) of the fiber. Then, in the actuator of the related art, the relationship between the angle x at which the twist mark is inclined with respect to the fiber axis and the angle y is x $\leq$ y, and the inclination of the twist mark with respect to the fiber axis is small. The suitable tensile stress may have the magnitude of 4.5 $\times$ 10$^{-3}$ times the tensile elastic modulus of the fiber.

In contrast, in the actuator according to the first embodiment of the present invention, the angle x and the angle y have the relationship of x > y + 0.5°. For this reason, an orientation to a rotation direction based on the fiber axis of the fibrous polymer material which configures the actuator is more remarkable, and has a thermally large movable range.

Specifically, the angle y is determined as follows. In a case where the tensile stress of the tensile elastic modulus of the fiber $\times$ 4.5 $\times$ 10$^{-3}$ is added to the fiber configured with the polymer configuring the fibrous polymer material at 25°C, and thus, breakage occurs at the time of twisting the fiber, the angle of the twist mark inclined with respect to the fiber axis in a state where the same fiber is twisted again in the same conditions with the number of rotations less than the number of twist rotations at a time point of the breakage by 10 rotations, and then, is subjected to a residual stress relaxation treatment described below at a temperature which is higher than the glass transition temperature of the polymer configuring the fibrous polymer material by 40°C or higher for 30 minutes, is set to y. In addition, in a case where the coiling occurs at the time of twisting the fiber by adding the tensile stress of the tensile elastic modulus of the fiber $\times$ 4.5 $\times$ 10$^{-3}$ at 25°C, the angle of the twist mark inclined with respect to the fiber axis in a state where the fiber is subjected to the residual stress relaxation treatment described below at a temperature which is higher than the glass transition temperature of the polymer configuring the fibrous polymer material by 40°C or higher for 30 minutes after the coiling occurs, is set to y.

In the actuator according to the first embodiment of the present invention, the relationship between the angle x and the angle y is x > y + 0.5°, but is preferably x > y + 1°, is more preferably x > y + 3°, and is particularly preferably x > y + 4°. The relationship between the angle x and the angle y is preferably x $\leq$ y + 40°, and is more preferably x $\leq$ y + 30°, from the viewpoint of easily obtaining the actuator according to the first embodiment of the present invention.

The angle x at which the twist mark on the outermost surface of the fibrous polymer material is inclined with respect to the fiber axis is preferably greater than or equal to 45°, is more preferably greater than or equal to 46°, and is particularly preferably greater than or equal to 48°. x $\leq$ 85° is preferable, and x $\leq$ 75° is more preferable, from the viewpoint of easily obtaining the actuator according to the first embodiment of the present invention.

A manufacturing method of an actuator according to a second embodiment of the present invention includes a step of twisting a fiber configured with a polymer having a glass transition temperature of higher than 25°C under an environment of a temperature which is higher than the glass transition temperature of the polymer.

In the manufacturing method of the actuator according to the second embodiment of the present invention, the fiber configured with the polymer having the glass transition temperature of higher than 25°C is twisted under the environment of the temperature which is higher than the glass transition temperature of the polymer. Accordingly, the angle x at which the twist mark on the outermost surface of the fibrous polymer material is inclined with respect to the fiber axis easily becomes larger than the angle y at which the twist mark is inclined with respect to the fiber axis at the time of twisting the fiber under an environment of 25°C up to the limitation on which the coiling occurs. Alternatively, in the manufacturing method of the actuator according to the second embodiment of the present invention, the angle x at which the twist mark on the outermost surface of the fibrous polymer material is inclined with respect to the fiber axis easily becomes larger than the angle y at which the twist mark is inclined with respect to the fiber axis at the time of twisting the fiber under an environment of 25°C up to the limitation on which the breakage occurs. That is, in the manufacturing method of the actuator according to the second embodiment of the present invention, a large twist is imparted, a rotation movement which occurs by heating on the basis of the fiber axis becomes larger, and the actuator according to the first embodiment of the present invention having a thermally large movable range can be easily obtained, compared to a case where the fiber is twisted under an environment of 25°C as with actuator of the related art.

In the manufacturing method of the actuator according to the second embodiment of the present invention, the environment of the temperature in the step of twisting the fiber is not limited insofar as the environment is an environment of a temperature which is higher than the glass transition temperature of the polymer, but it is preferable that the environment of the temperature is higher than the glass transition temperature of the polymer by 10°C or higher, and it is more preferable that the environment of the temperature is higher than the glass transition temperature of the polymer by 20°C or higher. It is particularly preferable that the environment of the temperature is higher than the glass transition temperature of the polymer by 40°C or higher. It is useful to set the environment of the temperature in the step of twisting the fiber to be a higher temperature from the viewpoint that it is possible to decrease the torque which is required for twisting the fiber and to extremely easily twist a thick fiber or a rigid fiber which requires large torque.

In the fibrous polymer material to which a twist is added under an environment of a temperature in the vicinity of the glass transition temperature of the polymer, it is preferable to perform the residual stress relaxation treatment such as placing the fibrous polymer material in an environment of higher than or equal to the glass transition temperature of the polymer for a constant period, in order to prevent an action in which the twist returns to the original state.

The manufacturing method of the actuator according to the second embodiment of the present invention as described above is an example of a method for obtaining the actuator according to the first embodiment of the present invention, but the method for obtaining the actuator according to the first embodiment of the present invention is not limited thereto. In the manufacturing method of the actuator according to the second embodiment of the present invention, the temperature of the environment in the step of twisting the fiber is higher than the glass transition temperature of the fiber, and the glass transition temperature of the fiber is higher than 25°C. That is, the temperature of the environment in the step of twisting the fiber > the glass transition temperature of the fiber > 25°C is satisfied. The manufacturing method of the actuator according to the second embodiment of the present invention is suitable for obtaining the actuator according to the first embodiment of the present invention, but in order to obtain the actuator according to the first embodiment of the present invention, a manufacturing method may be adopted in which the temperature of the environment in the step of twisting the fiber > 25°C > the glass transition temperature of the fiber is satisfied, or a manufacturing method may be adopted in which the glass transition temperature of the fiber > the temperature of the environment in the step of twisting the fiber > 25°C is satisfied. In consideration of the properties of the polymer material that the polymer material tends to be softened as the temperature increases, at least, it is preferable to adopt a manufacturing method in which the temperature of the environment in the step of twisting the fiber > 25°C.

In addition, as the manufacturing method for obtaining the actuator according to the first embodiment of the present invention, at the time of spinning and stretching the fiber, stretching may be performed while applying modification in the rotation direction based on the fiber axis. In this case, the angle y is for the twist mark at the time of twisting a fiber which is manufactured by performing usual spinning and stretching under an environment of 25°C by applying a tensile stress of a tensile elastic modulus of fiber which is manufactured by performing the usual spinning and stretching $\times$ 4.5 $\times$ 10$^{-3}$ up to the limitation on which the coiling occurs or the limitation on which the breakage occurs.

The actuator according to the first embodiment of the present invention may have other characteristics described below. A polymer having a glass transition temperature (Tg) of higher than 25°C is preferable as the type of polymer which configures the actuator according to the second embodiment of the present invention, from the viewpoint of enabling the manufacturing method of the actuator according to the second embodiment of the present invention described above to be adopted. The glass transition temperature (Tg) of the polymer may be higher than 45°C. For example, examples of the type of polymer include nylon such as nylon 6 (Tg: 45°C) and nylon 6,6 (Tg: 47°C), an acrylic resin such as polymethyl methacrylate (Tg: 100°C), a polyester resin such as polyethylene terephthalate (Tg: 80°C), polycarbonate (Tg: 145°C), polyvinyl chloride (Tg: 82°C), polycarbonate (Tg: 150°C), and the like. In addition, examples of the type of polymer having a glass transition temperature (Tg) of lower than 25°C include polyethylene (Tg: -120°C), polypropylene (Tg: -20°C), and the like.

It is preferable that the polymer configuring the fibrous polymer material has crystallinity. The degree of crystallinity of the polymer in the fibrous polymer material is preferably greater than or equal to 50%, and is more preferably 55% to 90%. By setting the degree of crystallinity to be in such a range, a polymer having high anisotropy and an excellent effect as an actuator is easily obtained.

It is preferable that the actuator according to the first embodiment of the present invention is a monofilament fiber to which a twist is added. In addition, the fibrous polymer material configuring the actuator according to the first embodiment of the present invention may be a coil-like fiber obtained by winding the monofilament fiber to which the twist is added around a mandrel, and at this time, the coil-like fiber may be obtained by winding the monofilament fiber in the same direction as that of the direction of the twist which is initially added, or the coil-like fiber may be obtained by winding the monofilament fiber in the opposite direction to the direction of the twist which is initially added. The coil-like fiber wound in the same direction as that of the direction of the twist which is initially added can function as an actuator which contracts by heating. The coil-like fiber wound in the opposite direction to the direction of the twist which is initially added can function as an actuator which extends by heating. Thus, it is possible to further increase the distance of a linear movement which occurs in an axis direction of a coil by heating, at the time of coiling the actuator according to the first embodiment of the present invention. In this case, it is preferable that an extending action is set not to flee to a horizontal direction by applying a core rod to the inside of the coil. The fibrous polymer material configuring the actuator according to the first embodiment of the present invention may be formed of a multifilament fiber.

Examples

Hereinafter, the present invention will be described in more detail by specific Examples. However, the present invention is not limited to the following examples.

[Measurement of Inclination Angle with respect to Fiber Axis of Twist Mark]

An actuator is observed by using an optical microscope, and the angle of a linear twist mark with respect to a fiber axis is measured. The angle of the twist mark is obtained by setting a direction parallel to a fiber axis direction to 0° and a vertical direction to the fiber axis to 90°, and by determining an inclination angle of the twist mark with respect to the twist mark which is observed in the vicinity of the center portion in a fiber diameter direction from the fiber axis direction.

[Evaluation of Movable Range of Actuator due to Heating]

An actuator sample having a length of 12 cm is sampled, a mark is applied to a position which is separated from one end (referred to as an end portion A) by 1 cm (a point B), 6 cm (a point C), and 11 cm (a point D), and an elongated stainless steel plate having a length of 30 mm, a width of 1.5 mm, a thickness of 0.5 mm, and a mass of 170 mg is attached to the position of the point B which is separated from the end portion A by 1 cm. Specifically, the stainless steel plate is bent in a position of 10 mm from the end of the stainless steel plate, the sample is interposed in the bent portion, and a force is applied by a nipper, and thus, the stainless steel plate is fixed to the actuator sample. The stainless steel plate is attached to the sample to be in a direction perpendicular to the sample. The stainless steel plate from the position of the point D which is separated from the end portion A by 11 cm to another end portion (a position which is separated from the end portion A by 12 cm) is fixed by a clamp, the stainless steel plate is lowered, the sample is applied into a water bath at a temperature of 25°C such that the sample is dipped up to the mark of the point C while being parallel to the vertical direction, and then, is pulled up, and is slowly applied into a hot-water bath at a temperature of 80°C such that the sample is dipped up to the mark of the point C. A force is applied in the rotation direction based on the fiber axis from the actuator sample by heating, the stainless steel plate is rotated around the actuator sample, and then, a difference between an angle at which the movement of the stainless steel plate stops and an angle at the time of dipping the sample in the water bath at 25°C is observed as an angle in the movable range. A set of rotation movements from that the sample is applied into the water bath at a temperature of 25°C to that the sample is applied into the hot-water bath at a temperature of 80°C is repeated five times, the average value of the angles in the movable range is set to a rotation angle of the actuator sample.

[Example 1]

A thread formed of nylon 66 (manufactured by TORAY MONOFILAMENT CO., LTD., Tensile Elastic Modulus: $2.9 \times 10^3$ MPa, Glass Transition Temperature: 47°C, a diameter of 0.5 mm) was prepared. The thread was cut to be 1 m in length, and a weight of 260 g was connected onto one end of the cut thread through an annular clasp. In addition, the other end was connected to a motor. The thread was stretched to extend in the direction of gravity by the weight, and a metal rod was passed through the annular clasp, and thus, one end of the thread to which the weight was connected was freely moved in the vertical direction, but not moved in the rotation direction. At this time, a tensile stress which was applied to the thread was 12.98 MPa, and the tensile stress which was applied to the thread was $4.5 \times 10^{-3}$ times a tensile elastic modulus of the thread. Then, a cylindrical heater (Product Name: MI Tube Heater manufactured by Misec Corporation) was disposed around the thread, the environment around the entire thread of 1 m was retained at 180°C, and the motor was operated at 400 rpm up to 580 rotations. In Example 1, a bump was not generated on the thread while the thread was twisted. Both ends of the thread were fixed such that the twist did not return to the original state, and then, the thread was retained at 180°C for 30 minutes under an environment where the humidity was not adjusted, and was subjected to a residual stress relaxation treatment. The twisted thread was set to the actuator sample for measurement and evaluation. The inclination angle of the twist mark with respect to the fiber axis was measured, and thus, the angle of the twist mark was 49.3°. The movable range of the actuator due to heating was evaluated, and thus, the rotation angle was 315°.

[Example 2]

An actuator sample was obtained by the same method as that in Example 1 except that the environment around the entire thread of 1 m was retained at 80°C, the motor was operated at 400 rpm up to 540 rotations, and both ends of the thread were fixed such that the twist did not return to the original state, and then, the thread was retained at 180°C for 30 minutes under an environment where the humidity was not adjusted, and was subjected to the residual stress relaxation treatment, at the time of twisting the thread. Even in Example 2, a bump was not generated on the thread while the thread was twisted. The inclination angle of the twist mark with respect to the fiber axis was measured, and thus, the angle of the twist mark was 47.6°. The movable range of the actuator due to heating was evaluated, and thus, the rotation angle was 292°.

[Comparative Example 1]

A sample was obtained by the same method as that in Example 1 except that the temperature around the thread was not increased by the heater, but the thread was twisted up to 580 rotations under an environment of 25°C, at the time of twisting the thread. In Comparative Example 1, the bump was generated on the thread while the thread was twisted, and thus, a portion not including the bump was set to the actuator sample. The inclination angle of the twist mark with respect to the fiber axis was measured, and thus, the angle of the twist mark was 44.2°. The movable range of the actuator due to heating was evaluated, and thus, the rotation angle was 270°.

[Comparative Example 2]

An actuator sample was obtained by the same method as that in Example 1 except that the temperature around the thread was not increased by the heater, but the thread was twisted up to 500 rotations under an environment of 25°C, at the time of twisting the thread. In Comparative Example 2, the bump was not generated on the thread while the thread was twisted. The inclination angle of the twist mark with respect to the fiber axis was measured, and thus, the angle of the twist mark was 44.5°. The movable range of the actuator due to heating was evaluated, and thus, the rotation angle was 270°.

[Comparative Example 3]

An actuator sample was obtained by the same method as that in Example 1 except that the temperature around the thread was not increased by the heater, but the thread was twisted up to 375 rotations under an environment of 25°C, at the time of twisting the thread. Even in Comparative Example 3, the bump was not generated on the thread while the thread was twisted. The inclination angle of the twist mark with respect to the fiber axis was measured, and thus, the angle of the twist mark was 33.1°. The movable range of the actuator due to heating was evaluated, and thus, the rotation angle was 225°.

[Comparative Example 4]

An actuator sample was obtained by the same method as that in Example 1 except that the temperature around the thread was not increased by the heater, but the thread was twisted up to 250 rotations under an environment of 25°C, at the time of twisting the thread. Even in Comparative Example 4, the bump was not generated on the thread while the thread was twisted. The inclination angle of the twist mark with respect to the fiber axis was measured, and thus, the angle of the twist mark was 20.0°. The movable range of the actuator due to heating was evaluated, and thus, the rotation angle was 160°.

[Comparative Example 5]

An actuator sample was obtained by the same method as that in Example 1 except that the temperature around the thread was not increased by the heater, but the thread was twisted up to 125 rotations under an environment of 25°C, at the time of twisting the thread. Even in Comparative Example 5, the bump was not generated on the thread while the thread was twisted. The inclination angle of the twist mark with respect to the fiber axis was measured, and thus, the angle of the twist mark was 10.1°. The movable range of the actuator due to heating was evaluated, and thus, the rotation angle was 80°.

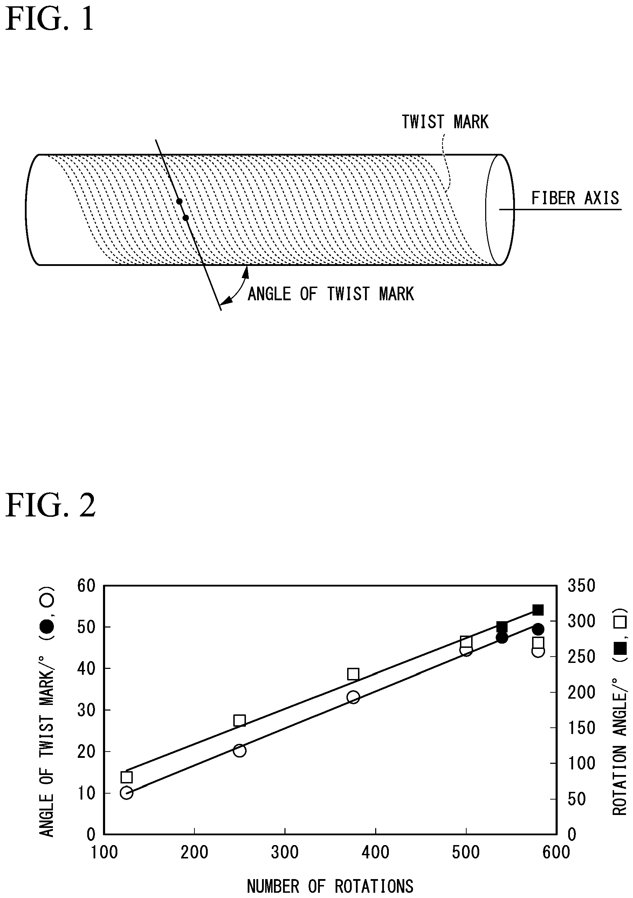

In FIG. 2, the angle of the twist mark and the rotation angle of the actuator sample of each of Examples 1 and 2 and Comparative Examples 1 to 5 with respect to the number of twist rotations are illustrated as a graph.
In Comparative Examples 2, 3, 4, and 5, the angle of the twist mark and the rotation angle had a relationship in approximately proportion to the number of twist rotations, but the angle of the twist mark and the rotation angle in Comparative Example 1 where the rotation was performed over the number of rotations of 500 times in Comparative Example 2, were approximately identical to the angle of the twist mark and the rotation angle in Comparative Example 2. That is, under an environment of 25°C, the number of rotations of 500 times in Comparative Example 2 is the limitation on which the coiling occurs, and in a case where a fiber of nylon 66 is twisted over number of rotations of 500 times, the coiling occurs. That is, the angle of the twist mark of 44.2° in Comparative Example 1 is $y_2$, the angle of the twist mark of 44.5° in Comparative Example 2 is $y_3$, and $y_3$ is within a range of $y_2 \pm 0.5°$. Therefore, the larger angle in both of the angles, that is $y_3$ of 44.5° is the angle y of the fiber of nylon 6,6 used in the examples and the comparative examples.
However, in Example 1, even in a case where the thread was twisted over the glass transition temperature of nylon 66 of 47°C up to 580 rotations under an environment of 180°C, the coiling did not occur, but the rotation angle of 315° represented the thermally large movable range.
In Example 2, even in a case where nylon 66 was twisted up to 540 rotations under an environment of 80°C, the coiling did not occur, but the rotation angle of 292° represented the thermally large movable range.
A temperature at the time of performing a twist treatment, the number of rotations, the presence or absence of the bump, the angle x of the twist mark, the relationship between the angle x and the angle y, and the rotation angle (an actuator movable range) in each of the examples and the comparative examples are shown in Table 1.

[Table 1]

| | Temperature at time of Performing Twist Treatment | Number of Rotations | Presence or Absence of Bump | Angle x of Twist Mark | Relationship between x and y | Rotation Angle |
|---|---|---|---|---|---|---|
| Example 1 | 180°C (> Tg) | 580 | Absent | 49.3° | x > y + 0.5° | 315° |
| Example 2 | 80°C (> Tg) | 540 | Absent | 47.6° | x > y + 0.5° | 292° |
| Comparative Example 1 | 25°C (< Tg) | 580 | Present | 44.2° (= y) | x = y | 270° |
| Comparative Example 2 | 25°C (<Tg) | 500 | Absent | 44.5° | x < y + 0.5° | 270° |
| Comparative Example 3 | 25°C (<Tg) | 375 | Absent | 33.1° | x < y + 0.5° | 225° |
| Comparative Example 4 | 25°C (< Tg) | 250 | Absent | 20.0° | x < y + 0.5° | 160° |
| Comparative Example 5 | 25°C (< Tg) | 125 | Absent | 10.1° | x < y + 0.5° | 80° |

Industrial Applicability

The actuator according to the first embodiment of the present invention can be used for motorizing various products which require a large angle or the movement of a large distance.

**Claims**

1.  An actuator which is formed of a fibrous polymer material configured with a polymer, and includes a twist mark on an outermost surface of the fibrous polymer material,
    wherein an angle x at which the twist mark is inclined with respect to a fiber axis of the fibrous polymer material, and an angle y at which the twist mark is inclined with respect to a fiber axis of a fiber at the time of twisting the fiber configured with the polymer configuring the fibrous polymer material by adding a tensile stress of an tensile elastic modulus of the fiber $\times$ 4.5 $\times$ 10$^{-3}$ under an environment of 25°C up to a limitation on which coiling occurs or a limitation on which a breakage occurs have a relationship of x > y + 0.5.

2.  The actuator according to Claim 1,
    wherein a glass transition temperature of the polymer is higher than or equal to 25°C.

3.  The actuator according to Claim 1 or 2,
    wherein the polymer is nylon.

4.  The actuator according to any one of Claims 1 to 3,
    wherein the angle x is greater than or equal to 45°.

5.  A manufacturing method of the actuator according to any one of Claims 1 to 4, comprising:
    a step of twisting a fiber configured with a polymer having a glass transition temperature of higher than 25°C under an environment of a temperature which is higher than the glass transition temperature of the polymer.

# FIG. 1

TWIST MARK

FIBER AXIS

ANGLE OF TWIST MARK

# FIG. 2

## INTERNATIONAL SEARCH REPORT

International application No.

PCT/JP2017/038691

### A. CLASSIFICATION OF SUBJECT MATTER
Int.Cl. F03G7/06(2006.01)i, D02G1/02(2006.01)i, H02N11/00(2006.01)i

According to International Patent Classification (IPC) or to both national classification and IPC

### B. FIELDS SEARCHED

Minimum documentation searched (classification system followed by classification symbols)
Int.Cl. F03G7/06, D02G1/02, H02N11/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/064220 A1 (IUCF-HYU) 28 April 2016, paragraphs [0308], [0328]<br>& US 2017/0314539 A1, paragraphs [0240], [0250] | 1-5 |
| P, A | WO 2017/022146 A1 (PANASONIC INTELLECTUAL PROPERTY MANAGEMENT CO., LTD.) 09 February 2017, entire text, drawings<br>& US 2017/0035550 A1, entire text, drawings | 1-5 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 December 2017 | 16 January 2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016252346 A

- JP 2016042783 A